# EUROPEAN PATENT SPECIFICATION

(11) **EP 2 969 850 B1**
(45) Date of publication and mention of the grant of the patent: **09.01.2019**
(21) Application number: 14765634.2
(22) Date of filing: 17.03.2014
(51) Int. Cl.: B65D 88/12, B65D 88/52, B65D 90/02, B65D 90/00, B65G 67/04

(54) **INTER-MODAL SHIPPING MINI-CONTAINERS AND METHOD OF USING SAME**
INTERMODALE MINIVERSANDBEHÄLTER UND VERFAHREN ZUR VERWENDUNG DAVON
MINI-CONTENEURS D'EXPÉDITION INTERMODALE ET LEUR PROCÉDÉ D'UTILISATION

(30) Priority: 15.03.2013 US 201361794916 P
(43) Date of publication of application: 20.01.2016
(73) Proprietor: Pawluk, William, Calgary, Alberta T2Y 4S0 (CA)
(72) Inventor: Pawluk, William, Calgary, Alberta T2Y 4S0 (CA)
(74) Representative: Ryan, John Mary
(86) International application number: PCT/CA2014/000267
(87) International publication number: WO 2014/138934

(56) References cited:
- EP-A1- 0 446 388
- WO-A1-96/09232
- DE-A1- 4 303 350
- US-A1- 2003 150 769
- US-A1- 2010 025 397
- US-A1- 2010 025 397
- US-B2- 6 497 541

## Description

### Field of the Invention

This invention relates to the field of mini-containers used for inter-modal shipping and in particular to a method for shipping using mini-containers as described herein.

### Background

The automotive logistics industry doesn't utilize its transportation assets effectively. Applicant believes that $50 billion is spent every year on inefficient transportation, wasting 8 billion litres of diesel fuel worldwide and leaving something in the order of 40 percent unutilized mileage. Applicant believes that the automotive logistics industry accounts for some of the highest empty load factors in transportation. Currently conventional automotive inbound and outbound loading means an empty load in one direction. What is needed, and it is one object of the present invention to provide, is a system providing for the combination of conventional automotive logistics and non-conventional carrying of dry goods or freight in inter-modal shipping mini-containers so as to reduce or eliminate the current levels of empty loading.

In the prior art, such as seen in United States patent no. 6,497,541, which issued to Pawluk on December 24, 2002, for a Convertible Vehicle Transporting Trailer, it is known not only to use conventional automobile carrier trailers for shipping automobiles, but also to provide convertible trailers which can carry automobiles and which may be collapsed so as to provide a flat bed trailer when not shipping automobiles. As described by Pawluk, conventional car carriers do not collapse down to become a flat bed trailer for hauling cargo, and so conventionally many times on a return trip a car carrier will be empty. One aspect of the present invention is to provide small shipping containers, so-called mini-containers, which fit into the space usually occupied by vehicles on conventional and convertible car carriers so that goods or other cargo may be easily shipped on the car carrier, and not just automobiles, and which may also be used for inter-modal shipping.

As stated in United States Patent No. 5,525,026, which issued June 11, 1996 to DeMonte, which describes a method and apparatus for loading, unloading, storing and/or transporting cargo of irregular shape, such as vehicles nested within a trailer, shipping container or like cargo transport, conventionally the transport of newly manufactured vehicles, such as passenger cars, vans, and small trucks, is carried out using an open framework truck trailer having a series of ramps upon which the vehicles are secured. The height and slope of the ramps are adjusted through the use of hydraulic cylinders in order to load the trailer by driving vehicles over the ramps, and to nest them together when stored on the trailer. An example of one such conventional trailer is described in United States Patent No. 4,106,805 to Harold issued August 15, 1978.

According to Harold, the development of conventional trailers has reached a complexity where all vehicle supporting ramps move up and down, and may extend and retract, through a limited range and require the provision of complex and costly system of permanently trailer-mounted hydraulic rams for each ramp. In practical terms the costs, complexity of fabrication, difficulty of maintenance and operation have done nothing to address the basic limitations of such trailers Conventional auto-transport highway semi-trailers also retain the costly limitation of being unsuitable for transporting any cargo but vehicles. Adaptability to transport different vehicle types and sizes remains limited.

DeMonte describes that due to differences in the profiles of vehicles, such automobile carrier trailers rapidly become obsolete since in practice a trailer is limited in capacity to a narrow range of vehicles which may be accommodated. A trailer is often limited to hauling the vehicles of one manufacturer only. Even of that single manufacturer's products, to accommodate vans and cars a different trailer configuration is used.

According to DeMonte, in loading and unloading the trailers, a high degree of skill is required in properly positioning the ramps, and in driving the vehicles within the very confined space of the trailer's interior. Damage to vehicles is common, resulting in cost increases and delays in delivery.

DeMonte notes that a distinct disadvantage of such trailers is that after vehicles have been unloaded, the trailer must generally return empty since it is ill-suited to transport any cargo other than vehicles.

DeMonte continues, stating that in transporting vehicles by rail, vehicles must also be driven on and off rail cars within confined spaces, and the vehicles are secured on horizontal fixed platforms which do not allow for nesting of the vehicles. As a result, there is a large portion of unused space within rail cars.

DeMonte states that the use of containers to ship vehicles would significantly improve the timing, security and costs of shipping compared to current methods which require frequent repositioning of vehicles between rail, sea, and land transport modes. Inserting vehicles into containers at the manufacturing plant and shipping to a dealer continuously supported on and/or contained in a prospective shipping pallet or container would reduce costs as proven in respect of other cargo, and would eliminate much of the damage to and soiling of new vehicles presently experienced. To date however according to DeMonte no such method has found commercial acceptance.

The published US patent application by Lau, publication no. 2003/0150769, discloses a freight storage container which includes six rectangularly-shaped panels including a base panel, front and rear end panels hingedly fastened to front and rear edges of the base panel and pivotable into overlying contact. The container is assembled on-site by folding upwardly the rear and front panels, installing two side panels in the base, and fastening a roof panel to upper peripheral edge walls of the side and end panels. The fastening is done using fastener joints each consisting of a tubular hinge lug member protruding downwards from a lower inside surface of the roof panel, a coaxially aligned tubular side panel hinge lug member protruding inwardly from a side panel, and a stainless steel friction pin forced into an interference fit within coaxially aligned bores of the two lugs.

Pubished US patent application by Krohn, publication no. 2010/0025397, discloses a foldable portable container provided with an integral mechanical mechanism for folding or unfolding the container. The integral mechanical drive mechanism is utilized to simultaneously angularly displace the opposing container end walls and the container roof attached thereto to fold or unfold the portable container.

Published European patent application by Strobel et al, publication no. 0446388, discloses an exchangeable container transport device wherein exchangeable containers can be mounted on a carrying vehicle. A fixing device is arranged on the carrying vehicle. A centering device aligns and fixes the exchangeable containers in the vehicle's longitudinal and transverse directions. A locking device detachably clamps the exchangeable containers on the carrying vehicle. The exchangeable containers are equipped in the area of their bottom edges, at least in the vehicle's longitudinal direction, with a straight continuous profiled rail which arranges the centering device in the middle of the carrying vehicle and the locking device separately on the side of the carrying vehicle.

Published German patent application by Juergen et al, application no. 4303350, discloses a transport arrangement for the disposal of valuable materials wherein a platform is arranged on a frame. A plurality of containers receive the valuable materials separated according to type.

One object of this invention is to provide an inter-modal, dry, mini-container, smaller in volume than that of DeMonte, for shipping cargo in smaller amounts to allow for reducing empty loading in the shipping space ordinarily occupied by automobiles being transported. Another object, of several, is to provide an improved multi-modal freight transportation system employing such mini-containers to transport many types of smaller cargo, and wherein the mini-containers' are not limited to be carried on or in any one type of mobile freight transportation conveyor, such as conventional flatbed trailers, automobile carrying trailers, railway cars, container ships, aircraft, etc.

### Summary of the Invention

What is neither taught nor suggested by the prior art, including by DeMonte in his United States patent no. 5,525,026, is the use of small containers, referred to herein as mini-containers, which are too small to carry conventional automobiles, for carrying cargo in or on mobile transport conveyors such as conventional automobile transport semi-trailers, convertible trailers, and other trailers, intermodal containers, railcars, ships, airplanes, etc., so as to allow both mixed and unmixed loads of such mini-containers and automobiles or other cargo for increased efficiency of use of such mobile transport conveyors and other transport means in the chain-of-transport.

The mini-containers may be modular in the sense that they may advantageously be disassembled, de-constructed, dis-mantled or folded down for compact storage, for example by stacking, thereby allowing them to be carried, for example, on the trailer, railcar, etc., until needed, and thereby remain available to be quickly erected for use, for example for loading or unloading by a conventional forklift.

In applicant's view, the useful, space-efficient sizing; that is, not just the making small, of the mini-containers, provides a flexibility of use not found in any present form of transporting cargo. DeMonte thought it was useful to put automobiles in containers. By necessity this means that these containers were large. Although the containers of DeMonte may be not as big as ocean-going full-size containers, the DeMonte containers are still too large to provide for flexible types of loading as provided by the present invention. If appropriately sized and appropriately used as described herein, mini-containers increase the efficiency of use of the space provided in a number of different types of mobile transport conveyors. Examples are given below which are not intended to be limiting.

One example of this is the above mentioned car-carrier prior art, which conventionally carries automobiles on an out-going leg of a trip, but because of the unique nature of the trailer is not adapted to carrying other types of loads on the return trip. Using mini-containers which are sized to fit somewhat snugly across the lateral available width of the car-carrier trailer, and which have a height so that the mini-containers may be stacked for example two or three high, again to fit somewhat snugly within the vertical space available, allows for efficient cargo-carrying return trips and for mixing outbound or in-bound cargo to include both mini-containers and automobiles or other bulky cargo in a mixed combination.

It is provided a mini-container according to claim 1.

In one embodiment, the roof, assisted for example by the rim of the roof, holds the panels in their erected-for-use configuration. In another embodiment, not intended to be limiting, the mini-container side, front and back panels may be provided with releasable fasteners, locks, latches or the like (hereinafter collectively referred to as locks) for the releasable locking of the panels to one another. The mini-container may also include at least one hinge per panel so that the side, front or back panels fold down into their position within the stack of panels stacked adjacent the base of the mini-container when in its storage configuration. Thus, advantageously, all of the side, front and back panels fold down into a position adjacent the base so as to be overlaid in a stack positioned under the roof. The roof is formed as a cap, where the rim is a downwardly projecting rim around the circumference of the roof, and wherein the cap encloses the wall panels within the cap when the panels are in their storage configuration. In one embodiment the cap also encloses the floor of the base, or substantially all of the base when the wall panels are in their storage configuration.

According to a further aspect of the invention it is provided a method according to claim 7.

Advantageously each mini-container has a length dimension sized to snugly fit within the width of the trailers or other mobile conveyor. Thus where the conveyor has a width which is constrained for highway use so that the width is less than or substantially equal to 8 feet, 6 inches (approximately 2.6 m) the mini-containers have a dimension corresponding thereto.

Also, where at least the automobile transport trailer and the enclosed van trailer have an internal height restriction of less than or equal to substantially 9 feet (approximately 2.7 m), each mini-container may be sized so that a vertical stack of the mini-containers, when they are in their erected-for-use configuration, snugly stacks within the height restriction, that is, wherein the snug stacking of the mini-containers results in an uppermost surface of the stack being adjacent an upper-most limit of the height restriction.

In one preferred embodiment each mini-container includes a palletized base and wherein the floor is formed as an upper surface on the base. The palletized base has apertures therein for lifting of the mini-container base by a fork lift from both the front or back of the mini-container, and for lifting from either of the sides of the mini-container base so that the forklift may load the mini-containers from an end or from a side of the mobile transport conveyor. The mini-containers may also include lifting lugs, for example for sling loading or transport, and may also include locking/latching mechanisms for locking/latching one mini-container down onto another lock down and stabilize a stack of loaded mini-containers. The lower-most mini-containers may lock/latch down onto the bed of the mobile conveyor.

In one example of the use of the mini-containers, the mini-containers are loaded onto a mobile transport conveyer so as to form a load chosen from the group including: a load of only mini-containers, a mixed load of mini-containers and other cargo, a mixed load of the mini-containers and at least one automobile.

The method may further include: lowering an upper deck of the automobile transport trailer down substantially onto the stack of mini-containers or raising a lower deck of the automobile transport trailer on which the stack of mini-containers is stacked, so as to bring the uppermost surface of the stack of mini-containers substantially up to the upper deck of the automobile transport trailer.

When the mini-containers have been transported and unloaded, then the method may include subsequently collapsing the mini-containers into their storage configuration, and storing the mini-containers, in their storage configuration, on the mobile transport conveyor for later re-use on the mobile transport conveyor in their erected-for-use configuration.

### Brief Description of the Drawings

In the drawings where a like reference numerals denote corresponding parts in each view:
Figure 1 is, in rear perspective view, an assembled mini-container according to one embodiment.
Figure 1a is a cross-sectional view along line 1a-1a in Figure 1.
Figure 1b is, in perspective view, the mini-container of Figure 1 being lifted by a forklift.
Figure 1c is, in front perspective view, the mini-container of Figure 1, with the lifting lugs elevated.
Figure 2a is, in perspective view, the base of the mini-container of figure 1.
Figure 2b is, in bottom perspective view, the base of figure 2a.
Figure 2c is, in side elevation view, an enlarged partially cut-away corner of the base of Figure 2a.
Figure 3 is, in partially cut away, partially exploded view, the interlocking of hard points between two vertically stacked mini-containers.
Figure 4a is, in top perspective view, the roof of the mini-container of figure 1.
Figure 4b is, in bottom perspective view, the roof of figure 4a.
Figure 5 is, in front perspective view, an alternative embodiment of the mini-container of figure 1, partially cut-away and with the roof removed.
Figure 5a is an enlarged view of a portion of figure 5 showing the interlocked upper corners of adjacent panels of the mini-container of figure 5.
Figure 5b is, in rear elevation view, an enlarged portion of the view of figure 5a.
Figure 5c is, in front perspective, partially cut-away view, the upper corners of the adjacent panels of the mini-container of figure 5 with the latch unlocked and the narrow panel partially pivoted away from the long panel.
Figure 6a-6h are, in front perspective view, are sequence of views showing the collapsing of the mini-container of figure 1 from its erected-for-use configuration to its storage configuration by the folding down of the side panels onto the base.
Figure 7 is, in side elevation view, the fully collapsed mini-container of Figure 6h with the roof mounted down onto the base so as to enclose the folded down side panels.
Figure 8 is, in perspective view, a stack of four of the mini-containers of Figure 6h, ready for transportation, deployment or storage.
Figure 9a is, in rear perspective view, a tractor and convertible car-carrier trailer combination showing the trailer in a flat-bed configuration and have a plurality of the mini-containers of Figure 1, partially cut-away, loaded thereon, wherein a variety of cargo is shown loaded in the mini-containers.
Figure 9b is, in side elevation, the tractor and loaded trailer of Figure 9a.
Figure 9c is the view of Figure 9b, with the mini-containers on the elevated front deck of the trailer replaced with a stack of mini-containers in their collapsed, storage configuration.
Figure 9d is the tractor and convertible trailer of Figure 9a with the trailer in its car-carrier mode and carrying a mixed load of cars and cargo-carrying mini-containers.
Figure 10a is, in perspective view, a railway car having a plurality of the mini-containers of figure 1 loaded therein.
Figure 10b is the railway car of figure 10 wherein the railway car is loaded with a combination of mini-containers and automobiles.
Figure 10c is, in side elevation view, a railway car being loaded with mini-containers from one end of the railway car.
Figure 11a is, in perspective view, the interior surface of the long panels of the mini-container of Figure 1.
Figure 11b is, in perspective view, the interior surface of the short panels of the mini-container of Figure 1.
Figure 12 is, in partially cut-away perspective view, an enlarged section of the hinge of one panel in the mini-container section of Figure 1a.
Figure 13 is, in perspective view, one lifting lug of the mini-container of Figure 1.
Figure 14 is, in partially cut-away perspective view, an alternative embodiment of the mini-container of Figure 1 employing over-center latches between the roof and side, front and/or rear panels.
Figure 15 is in partially cut-away perspective view, a further alternative embodiment of the mini-container of Figure 1 employing a latching mechanism between the hard-points on adjacent stacked mini-containers.

### Detailed Description of Embodiments of the Invention:

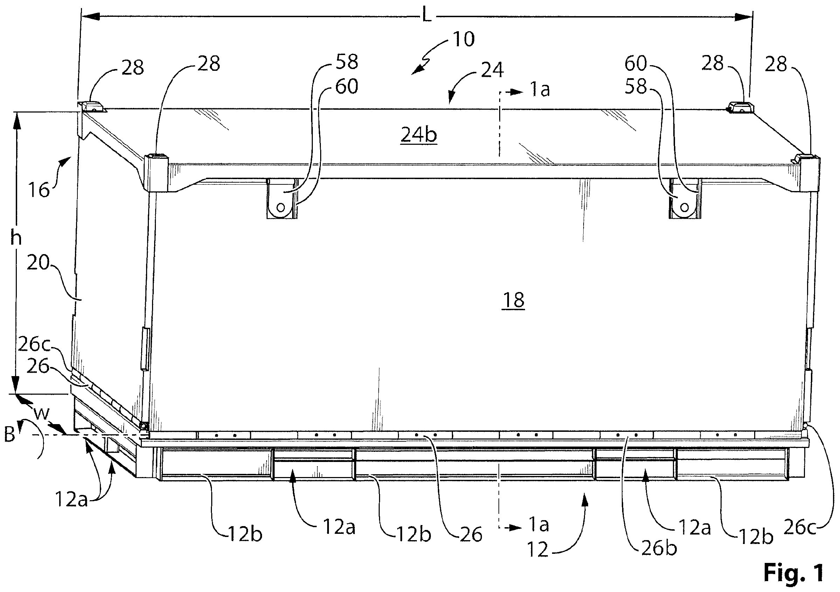

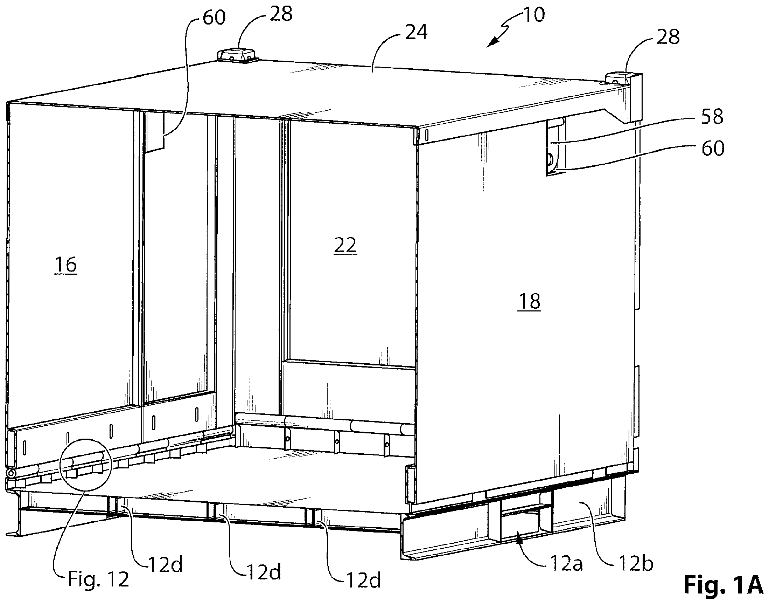

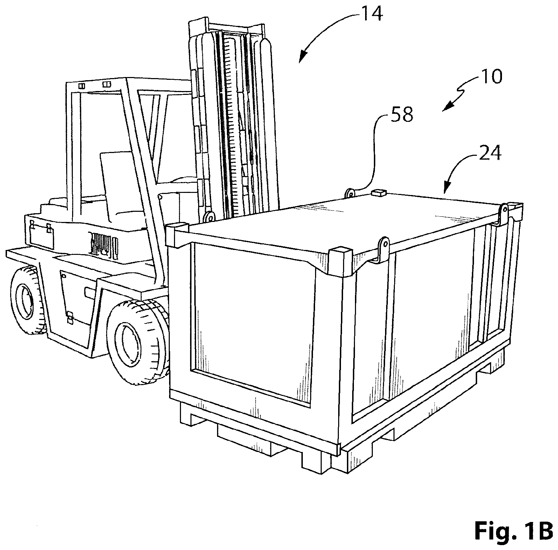

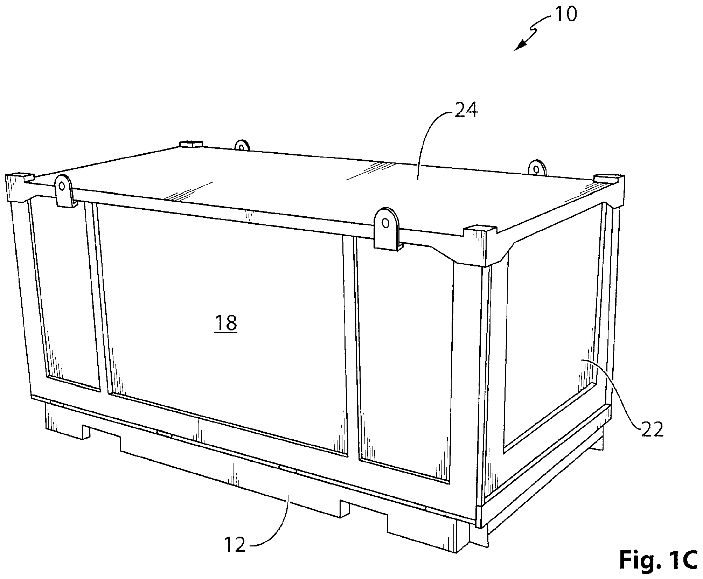

In one embodiment each mini-container 10 has exterior dimensions of for example approximately 1.29 metres wide by 2.55 metres long by 1.24 metres high, labeled respectively in Figure 1 as width w, length 1, and height h. Preferably mini-container 10 is of collapsible construction. Each mini-container 10 may be of metal or other construction. For example each mini-container 10 may be made of galvanized steel, or other alloys, or of lighter weight metals such as aluminum or titanium, or may be made of plastics, or carbon-fibre, fibre-glass, or other composite materials, or may be made of more conventional materials including wood, or any combination of these.

Each mini-container 10 is preferably built on a palletized base or otherwise includes a base 12 having apertures 12a which are accessible with the forks of a fork truck or fork lift (collectively herein a "fork lift") 14 from opposite or all sides of the base 12. Advantageously, each mini-container 10 once assembled is substantially water-tight, for example by the use of seals (not shown) between adjacent panels, roof and base as would be known to one skilled in the art, so that each mini-container remains substantially dry inside. Advantageously, when mini-container 10 is collapsed, the size ratio of the outside height dimensions may be for example substantially in the range of 4:1 to 5:1(erected: collapsed). Thus, in its collapsed storage configuration, for example four or five mini-containers 10 may be stored in the space taken by a single mini-container 10 when erected. For example, the height of a collapsed mini-container 10 may be approximately 26.6 cm. Advantageously the length to width ratio of a mini-container is substantially 2:1.

Further advantageously, the erected mini-containers 10 should be stackable at least three high when loaded to their maximum weight capacity. The mini-containers maybe lockable, for example using a handle, latch or otherwise a lock as herein-before defined. Each mini-container 10 advantageously should be manually manageable by two men when the mini-container is unloaded.

Each mini-container may include lifting points or lugs, and may include stacking legs or feet, and advantageously may have a substantially flush exterior surface on all sides, which nay be used for displaying advertising..

In one embodiment, one side of an erected mini-container 10, for example a long side panel 16, otherwise referred to herein as a front panel, of each mini-container 10 is removable, for example by sliding the front panel laterally along and relative to the base to allow access into the mini-container by a fork lift 14. The forklift may thus be used to load cargo 10a into the enclosure of the mini-container, and then the forklift may be used to move the loaded mini-container 10.

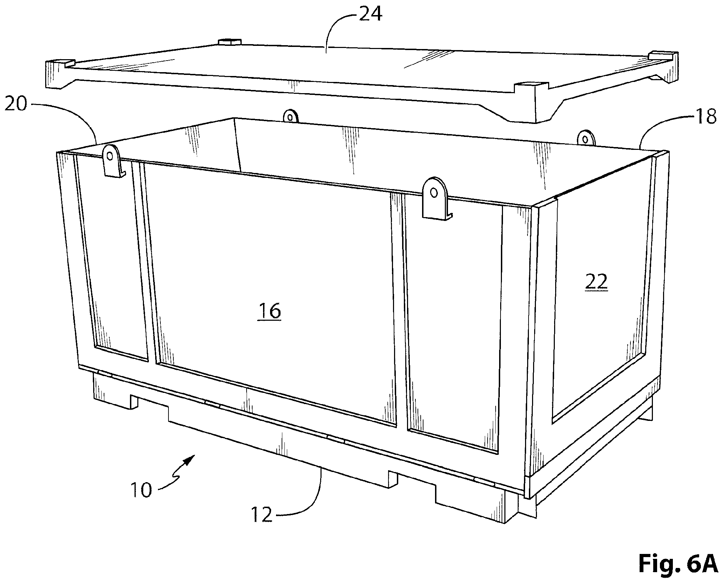

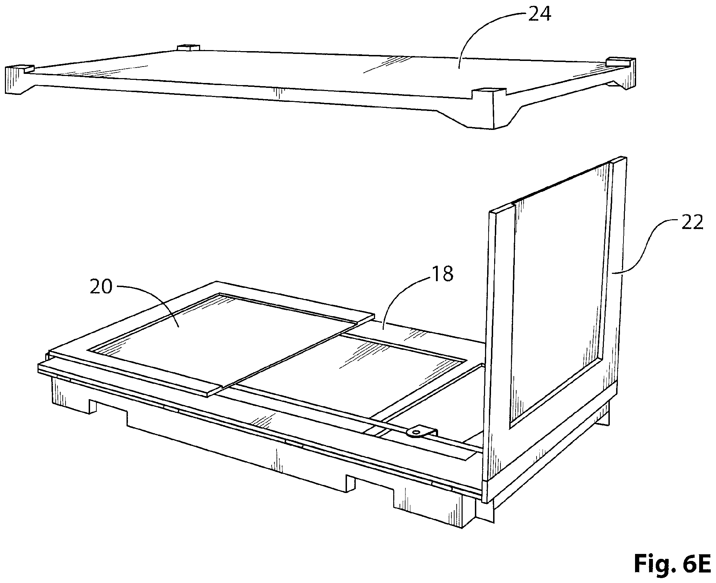

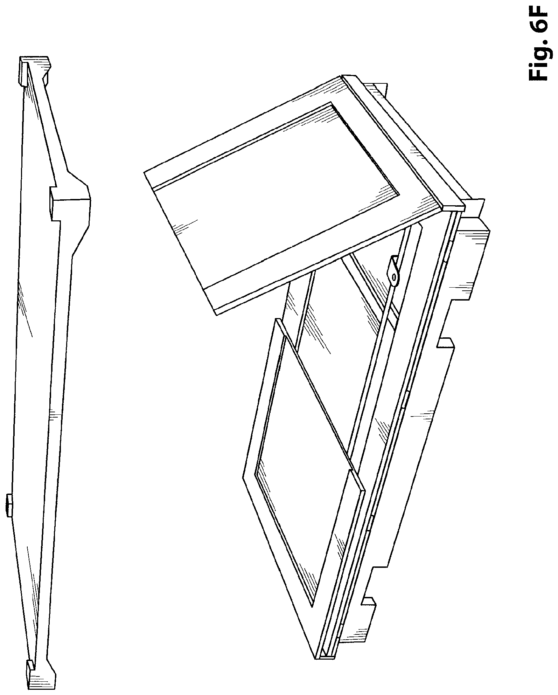

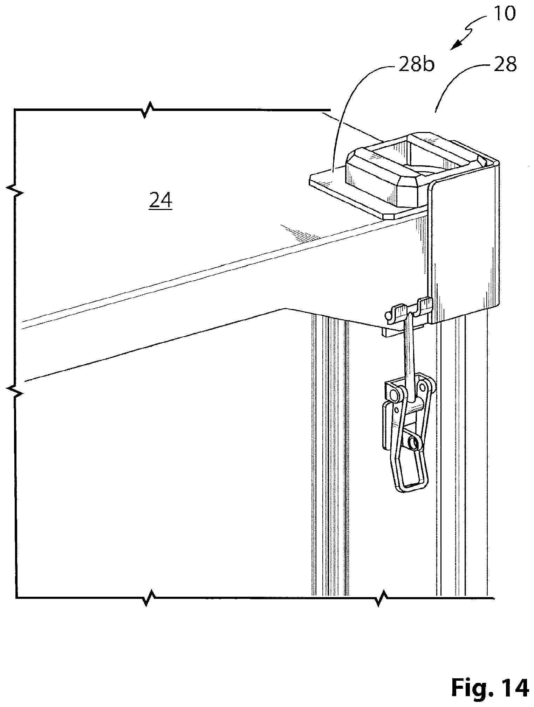

In one embodiment the sides of each mini-container 10 fold in sequence as shown by way of example in Figures 6a-6h, about hinges 26 as follows: fold down removable long side panel 16 first, then the opposite long side panel 18 second, then both narrow side panels 20, 22. Once the side panels 20, 22 are folded down, the roof 24 may be placed down onto the stack of folded-down panels. This final collapsed position and arrangement is one example of the storage configuration of the mini-container. Roof 24 has circumferential rim 24a depending downwardly there-around, rim 24a may encase panels 16-22 therein when roof 24 is in the storage position. In a preferred embodiment roof 24 locks in the storage position, for example using latches or locks as defined herein by way of example such as the latch of Figure 14, thereby holding the folded-down panels 16-22 in place on base 12 in a tidy and conveniently small package.

For sake of reference herein and without intending to be limiting, the removable long panel 16 is referred to as the front panel, the opposite long panel 18 is referred to as the back panel, narrow panel 20 is referred to as the right panel, and narrow panel 22 is referred to as the left panel. Each of these panels may be formed differently than as illustrated, as the illustrations are by way of example only.

In certain embodiments castors (not shown) may be provided. The castors mount under the bottom corners of a mini-container 10 and may be removable. Preferably receivers for mounting of the castors under a mini-container 10 are incorporated into the frame of base 12.

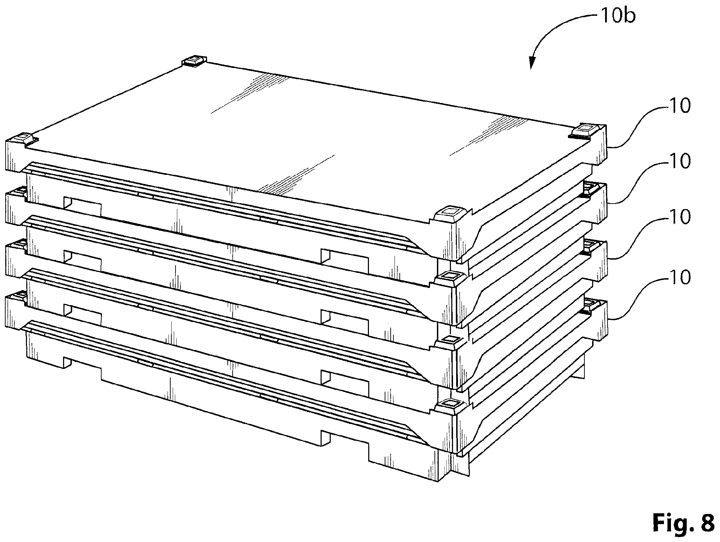

When stacked vertically such as shown in Figure 8 as stack 10b, mini-containers 10 interlock so as to increase the stability of the stacked column of mini-containers. This is accomplished by providing hard points 28, that bear the vertical weight of the mini-containers in the stack 10b, so as to relieve bearing loads on mini-container seals. Consequently, each of the four corners of each mini-container 10 advantageously has a metal-on-metal hard point surface to transmit vertical forces into the vertical members 32. Vertical members 32 may be made of hollow tubing or channel, although this is not intended to be limiting, as other rigid elongate members would work.

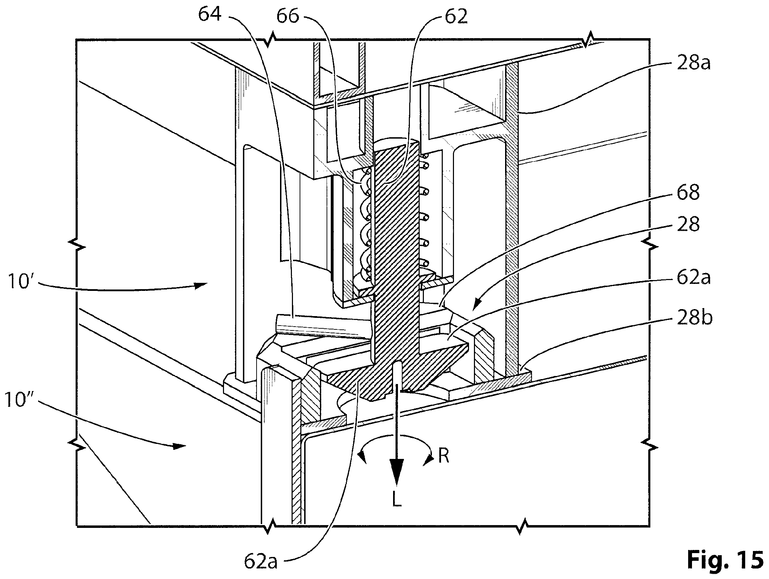

Holes 34 may be provided in the base frame for tie down of the mini-container to the deck of a mobile transport conveyer such as a trailer. Other tie down methods may be used such as those used on conventional Hi Boy and Step Deck trailers, as would be known to those skilled in the art. Locking mechanisms such as shown by way of example in Figure 15 may also be employed, where for example shaft 62 may be lowered in direction L using handle 64 against the return biasing force of spring 66 so as to engage locking lugs 62a under locking flanges 68 of hard points 28 by the rotation of shaft 62 and lugs 62a in direction R. Lugs 62a may also be used to lock a mini-container 10 down into a deck or bed of a mobile conveyor such as a trailer.

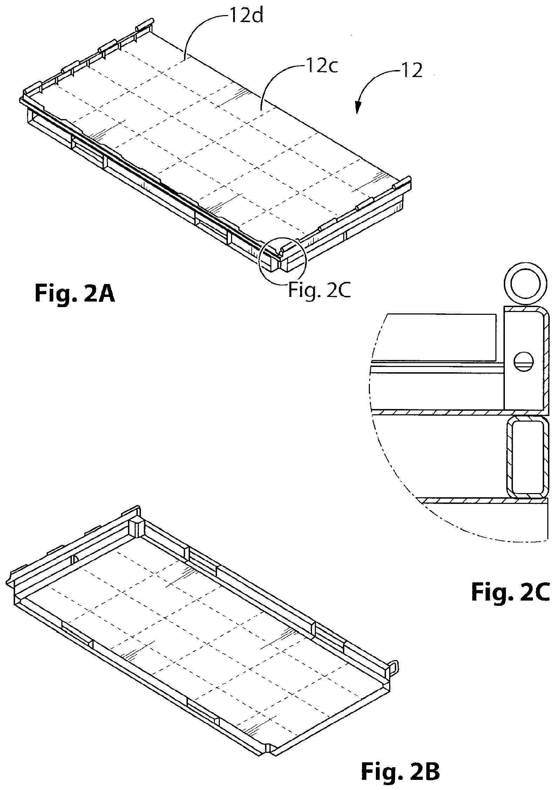

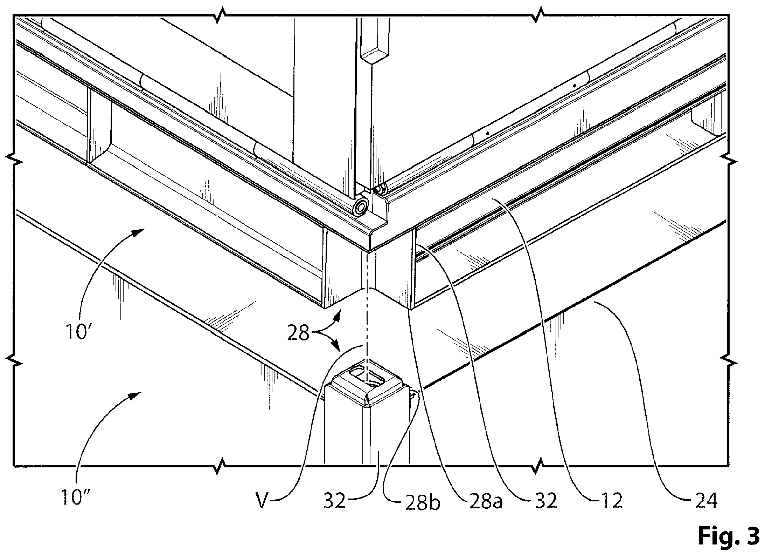

As seen in Figures 2a and 2b, base 12 may take a form of a conventional pallet in terms of its function of accepting the forks 14a of a fork lift 14 into pallet apertures 12a. Apertures 12a may thus be formed as pairs of apertures in or between pallet feet 12b. The deck 12c of base 12 may be supported by a lattice structure of stringers or cross members 12d (shown in dotted outline). Hard points 28 are formed as part of, the underside of feet 12b, the feet 12b on the ends or forming the corners of base 12. The interlocking along vertical axis "V" of hard points 28 between vertically stacked adjacent mini-containers 10 is seen in Figure 3, where the downwardly protruding angle-channel hard point 28a on an upper mini-container 10' engages on, so as to mate with, a corresponding upper surface of hard point 28b mounted on or forming the corresponding upper corner of the lower mini-container 10".

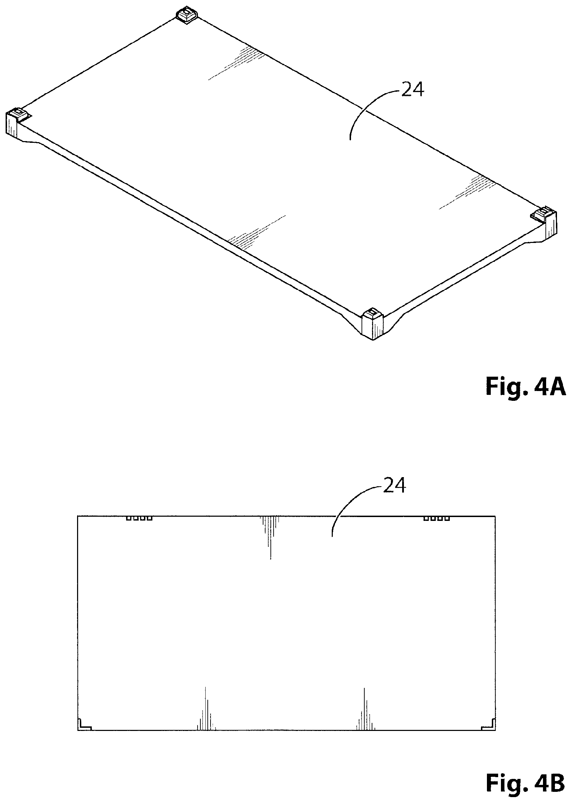

Roof 24, as seen in for example figures 4a and 4b, has circumferential rim 24a which provides a supporting frame for cover 24b. Hard points 28, and in particular hard points 28a and 28b as illustrated may also mate male and female couplings (not shown). Hard points 28b form part of the vertical members 32 which are mounted to the corners of rim 24a.

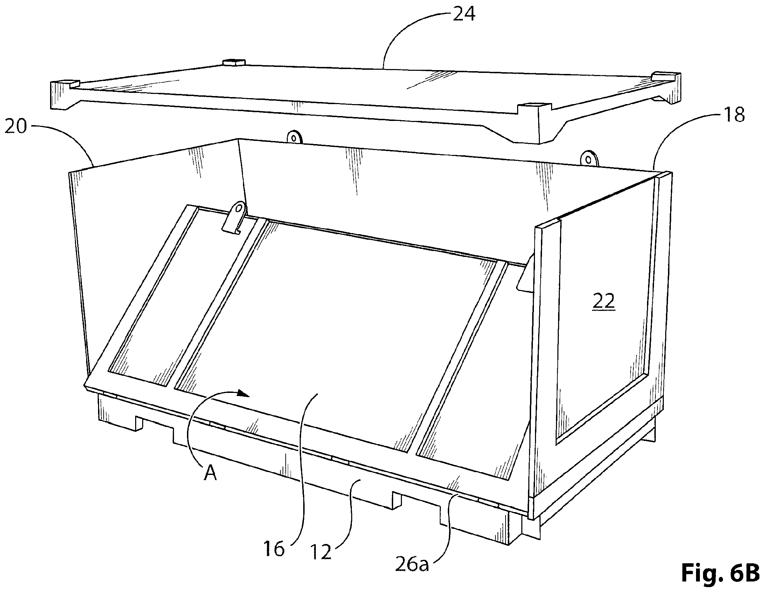

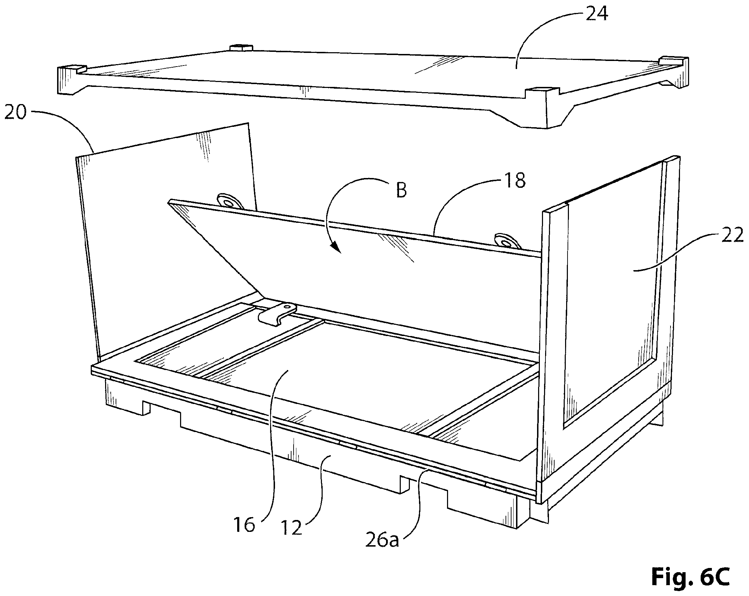

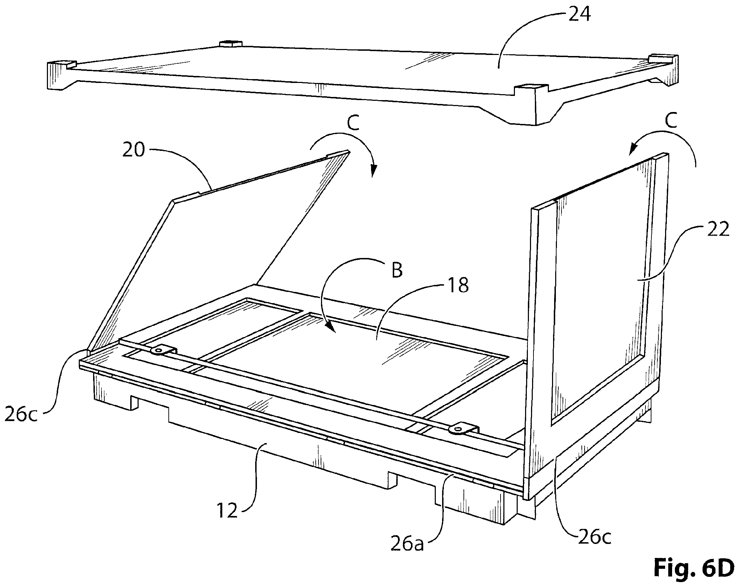

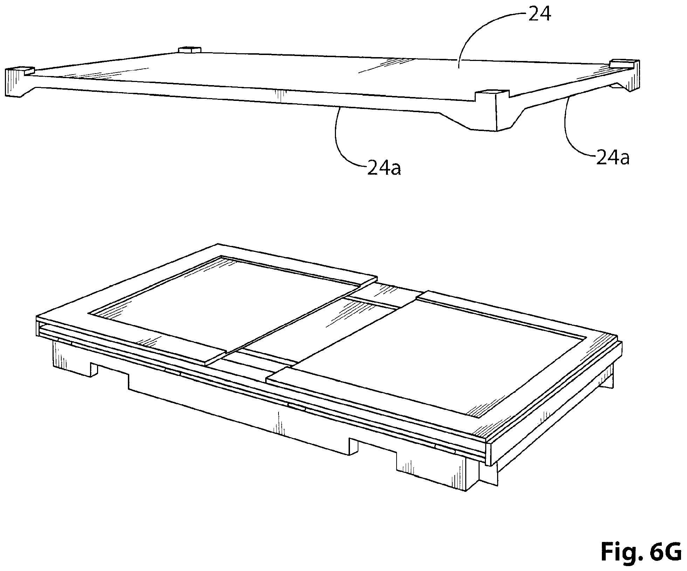

As also seen in the progression of views in Figures 6a-6h, it will be noticed that, in order to provide for the thickness of each panel 16, 18, 20, 22 when the panels are folded down onto base 12, each of the corresponding hinges 26 are at increasingly elevated positions relative to base 12. Thus, in the illustrated embodiment, which is not intended to be limiting, with roof 24 removed (Figure 6a), because front panel 16 folds down onto base 12 first (Figure 6b), that is, before the other panels are folded down, the corresponding front hinge 26a is lower most as compared to the elevation of the other hinges, being substantially flush with deck 12c. Because back panel 18 folds down onto front panel 16 (Figure 6c), the hinge 26 which corresponds to back panel 18, namely, hinge 26b is elevated relative to hinge 26a by the thickness of front panel 16. Hinges 26c, which correspond to right and left panels 20 and 22 respectively, are both at the same elevation relative to base 12 because, when folded down (figures 6d-6g), panels 20 and 22 do not overlap but rather fold down into a co-planar abutting position (Figure 6g) on panel 18.

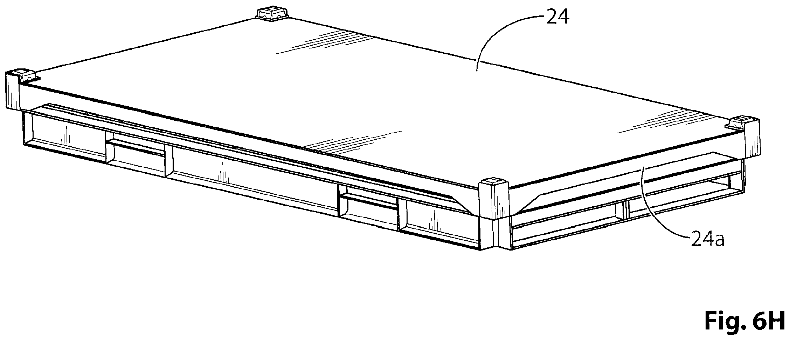

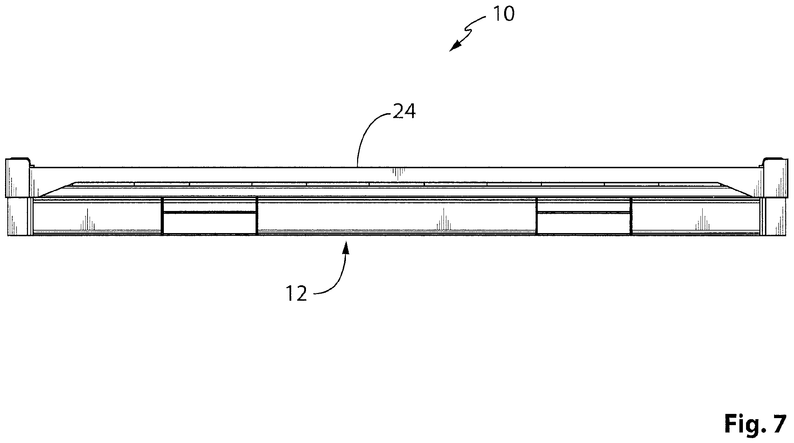

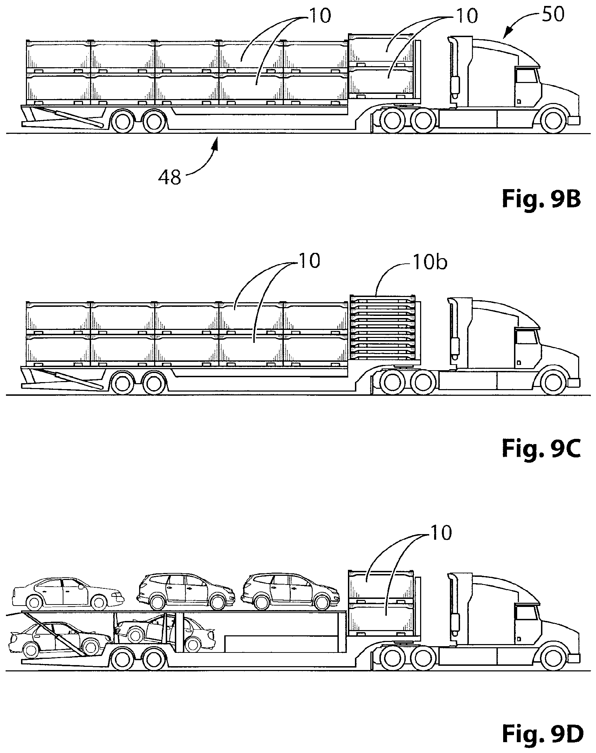

Thus when transitioning from the fully erected position of figure 6a to the fully collapsed storage position of figure 7, front panel 16 rotates about hinge 26a in direction A, back panel 18 rotates about hinge 26b in direction B, followed by panels 20 and 22 folding down in direction C about their corresponding hinges 26c. Once panels 16-22 are in their fully folded down positions, roof 24 may be positioned as a cover over the folded down panels such as seen in figures 6g, 6h so that rim 24a surrounds the folded down panels and their corresponding hinges 26 to provide an efficient tightly packed and compact package containing mini-container 10 in its storage position while still providing access to apertures 12a. Thus the collapsed mini-container 10 or the stack 10b may be moved by using a fork lift 14. Notably mini-containers 10 when in their storage position may still be stacked one upon the other by interlocking of hard points 28. Consequently, many mini-containers 10 in their storage position may be carried on a mobile transport conveyor as seen in Figure 9c in a stack 10b. For example a stack 10b of four mini-containers 10 may only occupy the space of one mini-container 10 in its erected position. This minimizes the penalty to carrying capacity where it is desired to transport mini-containers 10 in their storage position so that they may be erected for use on a return trip of the mobile transport conveyor.

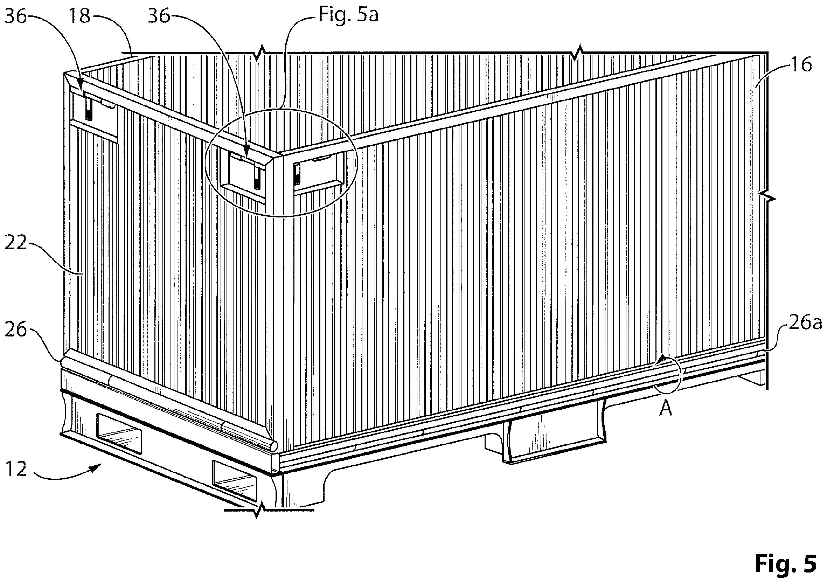

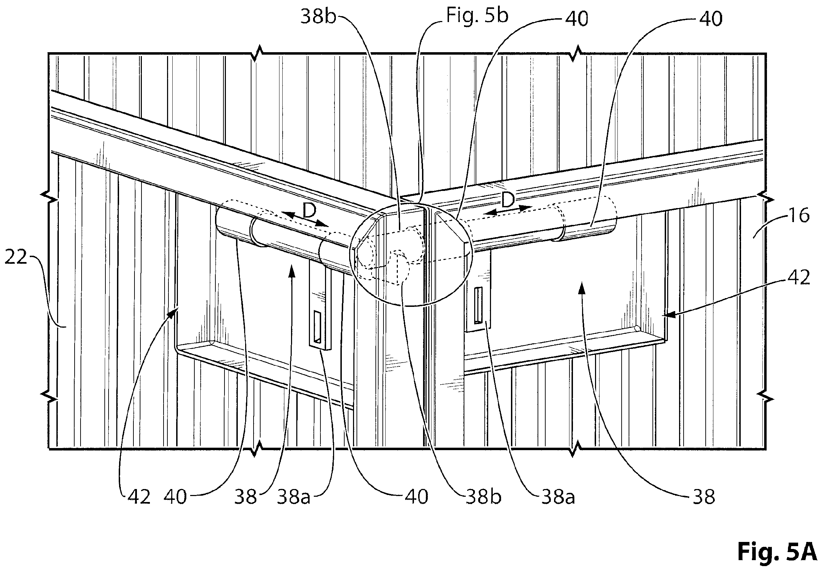

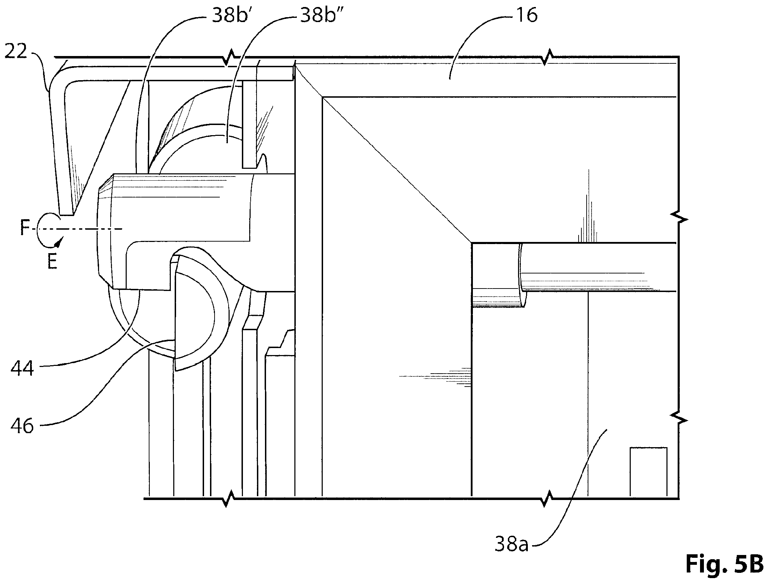

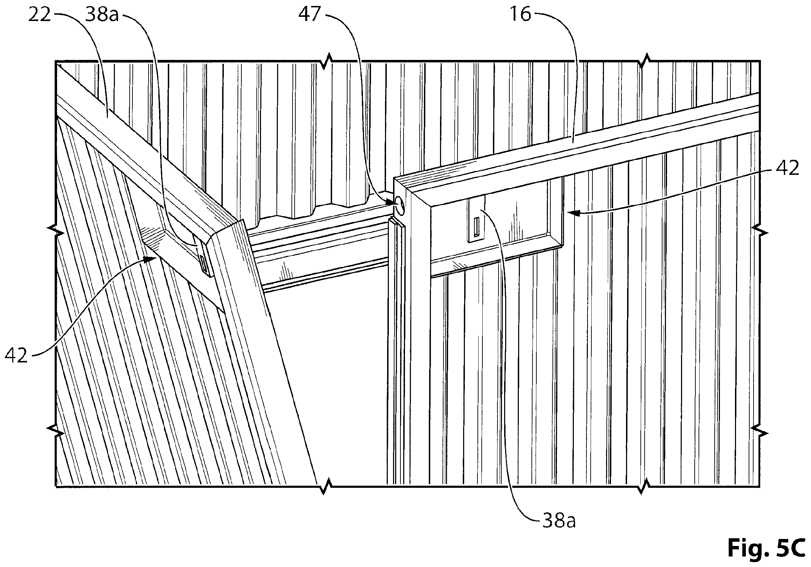

An alternative embodiment of mini-container 10 is shown in figure 5 with roof 24 removed, and with panels 16-22 in there erected position. As seen in figures 5a-5c, one manner, not intended to be limiting, of securing the panels 16-22 to each other when in their fully erected position, is the use of interlocking latches 36 at each of the upper four corners of mini-container 10. Thus as seen in figure 5, when roof 24 is removed from mini-container 10, the protective cover provided by roof 24 and rim 24a covering over latches 36 is removed thereby exposing access to slide bolts 38. Slide bolts 38 are merely one example of releasable locking of the panels to one another and is not intended to be limiting as other forms of locks, as defined herein, or no locks at all, would also work. Each slide bolt 38 is journaled in a corresponding pair of collars 40 mounted into recesses 42 in corresponding adjacently abutting sides of panels 16-22. Slide bolts 38 are free to slide in direction D, constrained by the movement of slide bolt handle 38a between collars 40. The interlocking ends 38b of each slide bolt 38 releasebly lock against one another when slide bolt handles 38a arc in their most closely adjacent position such as seen in figure 5a. One interlocking latching mechanism, which is not intended to be limiting, is seen in figure 5b wherein a downwardly protruding flange 44 of the upper interlocking end 38b' of the upper slide bolt 38, is rotated downwardly into position by the corresponding rotation of the corresponding slide bolt handle 38a in direction E about axis of rotation F so as to engage flange 44 behind vertical face 46 of the lower interlocking end 38b" of the lower slide bolt 38.

As seen in figure 5c, with the upper interlocking end 38b' retracted into its corresponding aperture 47, panels 16 and 22 maybe rotated away from one another about their corresponding hinges 26. The same latching mechanism may be applied in each of the four corners between the four panels 16-22.

Mini-containers 10 may be loaded onto a standard automobile carrier, or a convertible trailer such for example as described in United States Patent no. 6,497,541, or onto conventional semi-trailers. Mini-containers 10 may also be loaded onto rail cars, ocean vessels, airplanes, or other mobile transport conveyors. Thus the uses of mini-containers 10 provide a multi-modal freight transportation solution. In some applications, not intended to be limiting, such as in hauling automobiles, the use of mini-containers 10 may reduce or substantially eliminate inefficient empty back-hauling of the automobile carrier, thereby potentially increasing profit margins for the hauling enterprise.

When not in use, as seen in figure 9c, mini-containers 10 may be stacked in a stack 10b on a convertible trailer 48, for example to occupy the space of two fully erected mini-containers 10.

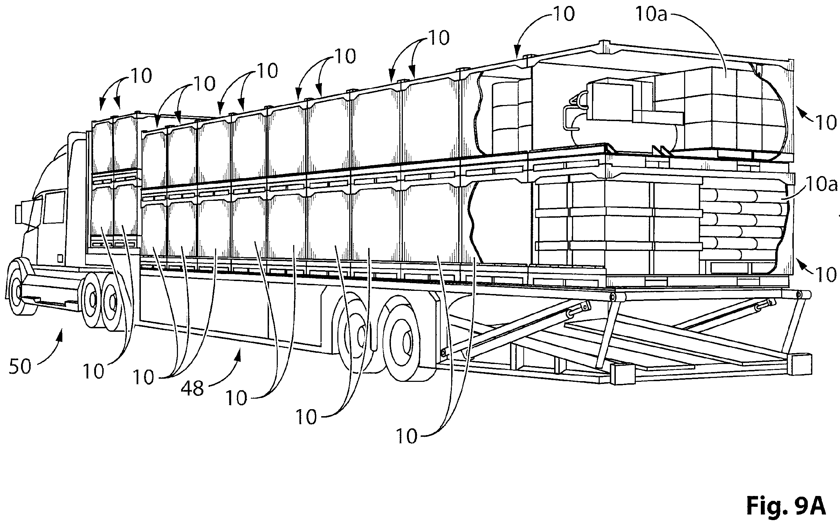

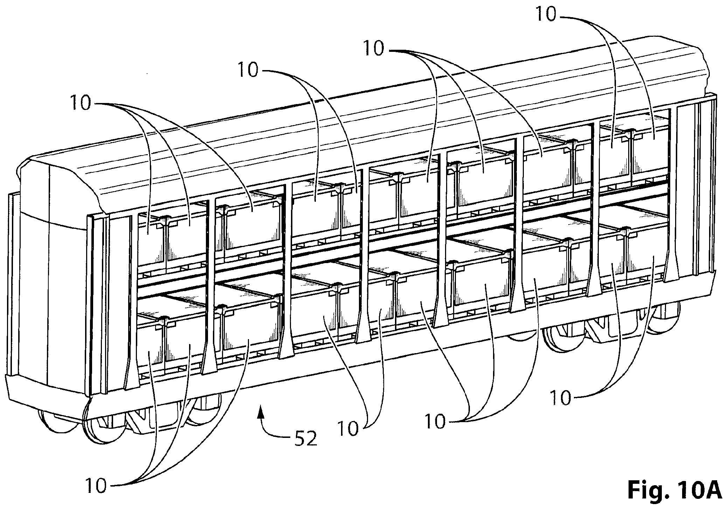

In the illustrated embodiment of Figure 9a, convertible trailer 48 has twenty mini-container 10 loaded on it, with a further four mini-containers 10 loaded on the elevated front mounted on the load deck behind the cab of tractor 50. Thus it will be understood that access to mini-containers 10 is relatively easy, even in confined space such as illustrated in Figures 10a-10c showing the example of a loaded railway car, by the use of a fork lift 14 which may load or unload mini-containers 10 either from the sides or from the ends of the mobile conveyor, for example trailer 48, or tractor 50, or railway car 52, or a ship, boat, barge, airplane, etcetera. Advantageously for these and other applications each mini-container 10 has a storage capacity of for example in the range of approximately 3 square metres(m²) to 31/4 m².

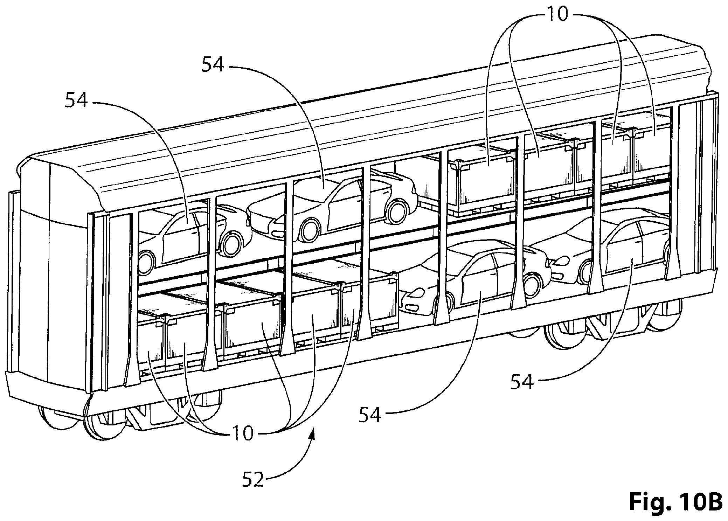

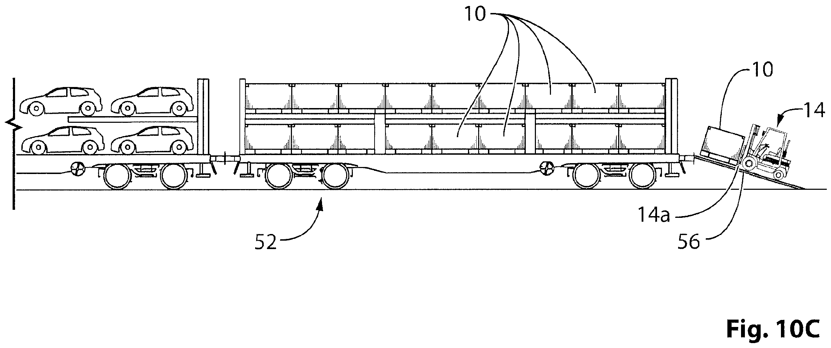

In the illustrated examples of Figures 10a-10c, railway car 52 carries for example twenty mini-containers 10. In the example illustrated in Figure 10b railway car 52 is carrying a mixed load of mini-containers 10 and automobiles 54, for example nine mini-containers 10 and four automobiles 54. It will be understood that the numbers of mini-containers 10 being carried within railway car 52, or for that matter in or on any mobile transport conveyor, may be fewer in number or greater in number depending on how much other types of cargo is also being carried. For example, in the illustrated embodiment, how many automobiles 54 are to be transported simultaneously with mini-containers 10 may be varied depending on demands. Thus as seen in figure 10c, which illustrates a railway car 52 carrying a full load of mini-containers 10, it will be appreciated that fork lifts 14 may load or unload mini-containers 10 from either end of railway car 52 *via* a loading ramp 56, or may be for some types of railway cars (example flatbed) or other flatbed or open-sided mobile conveyors, forklifts 14 may load mini-containers 10 from the sides.

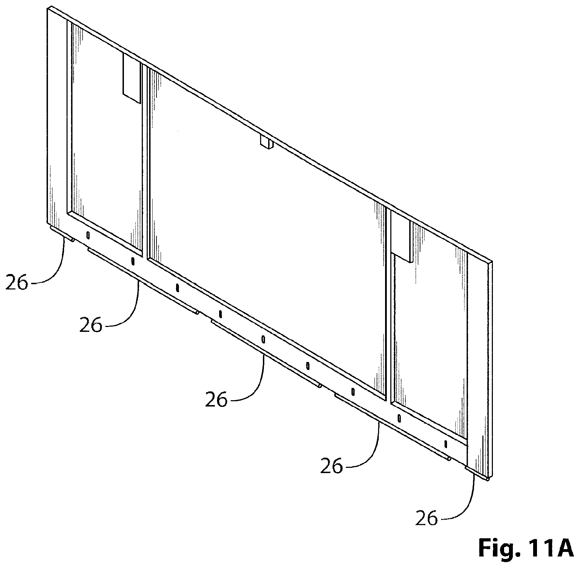

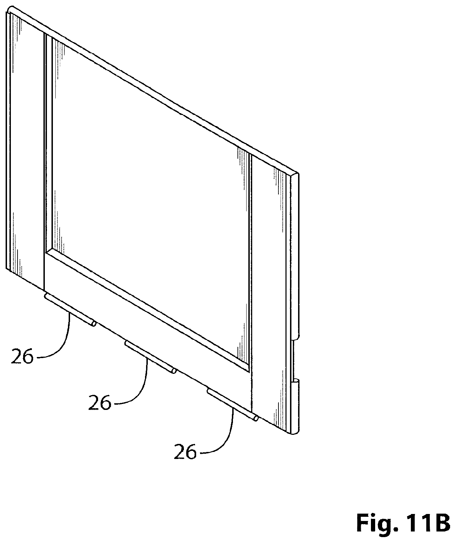

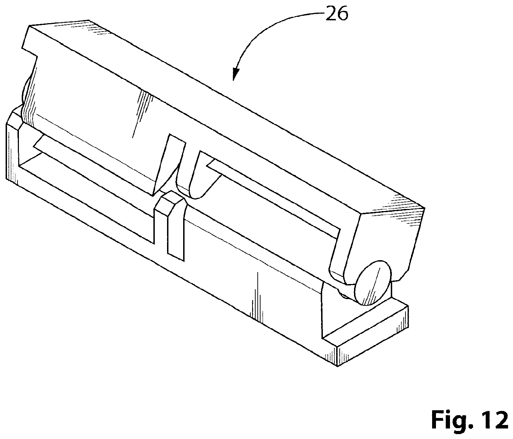

The interior surfaces of the long and short panels of panels 16-22 are shown in Figures 11a and 11b respectively. Again, these are not intended to be limiting, but show one embodiment of incorporating hinge 26, at least in part, into panels 16-22. Another view of the arrangement of hinges 26 is seen in the elevation view of Figure 2c. Portions of hinges 26 are also seen protruding, or mounted to, the upper deck of floor of base 12 in Figure 2a. A cut-away section of a hinge 26 is seen in the view of Figure 12.

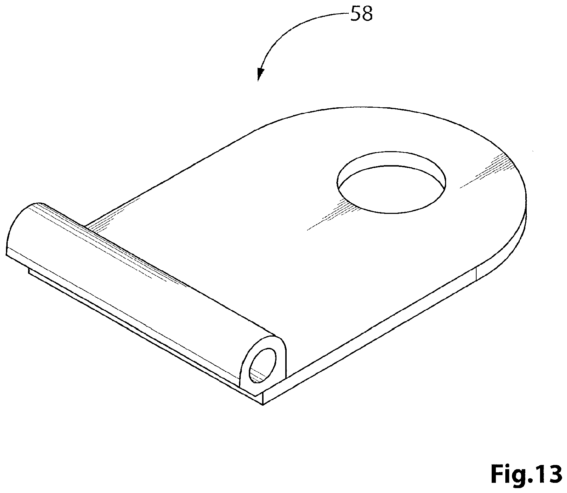

A lifting lug 58 is illustrated in Figure 13, and shown, respectively, folded down in Figure 1 so as to be recessed in set-backs 60, and pivoted upwardly for use in Figures 1b and 6a for example.

## Claims

1. A mini-container (10) for intermodal shipping comprising a plurality of panels forming a pair of oppositely disposed side panels (20, 22), a front panel (16), a back panel (18) opposite to said front panel, a base (12), and a roof (24), wherein said side, front and back panels, when erected on said base form an enclosure of said mini-container (10), and wherein said panels are configurable between an erected-for-use configuration wherein they are releasably mounted to one another to form a box on said base, and a collapsed storage configuration wherein said side, front and back panels are stacked, lying flat relative to one another to form a stack of said panels laying on said base and wherein in said storage configuration said stack is overlaid with said roof (24),
and wherein the roof (24) has a circumferential rim (24a) depending downwardly there-around; **characterised in that** the base (12) has feet (12b) mounted underneath and at each corner thereof, wherein hard points (28, 28a, 28b) are provided at each of the four corners of the mini-container (10), which hard points (28, 28a, 28b) are configured for bearing the vertical weight of other mini-containers (10) so as to relieve bearing loads on mini-container seals when a set (10b) of mini-containers is stacked vertically, which hard points (28b) form part of vertical members (32) which are mounted to the corners of rim (24a), and which hard points (28a) form part of the underside of the feet (12b); and wherein, when the mini-container (10) is in the storage configuration, the mini-container (10) is configured for stacking a number of such mini-containers (10) one upon the other by interlocking of the hard points (28a) on one mini-container (10') with the hard points (28b) on a second container (10").

2. The mini-container of claim 1 wherein when in said erected-for-use configuration said side, front and back panels (16, 18, 20, 22) are maintained in a vertical position to form a contiguously sided box on said base.

3. The mini-container of claim 2 further comprising at least one hinge (26) per said panel, and wherein said side, front or back panel fold down about said hinges into said stack adjacent said base when in said storage configuration.

4. The mini-container (10) of claim 3 wherein said each side, front and back panel has a corresponding hinge of said at least one hinge, and all of said side, front and back panels fold down into said position adjacent said base so as to be overlaid under said roof.

5. The mini -container of claim 4 wherein said roof (24) is a cap, and said cap substantially encloses said panels within said cap when in said storage configuration.

6. The mini -container of claim 5 wherein said cap (24) also encloses at least a portion of said base.

7. A method of intermodal shipping using the mini-containers of claim 1 comprising:
a) providing a plurality of the mini-containers of claim 1, wherein each mini-container (10) of said plurality of mini-containers is assembled from said panels so as to form said pair of oppositely disposed side panels (20, 22), a front panel (16), a back panel (18) opposite to said front panel, a base (12), and a roof (24), wherein said side, front and back panels releasably mount to another to form an enclosure of said mini-container (10) and release from one another for positioning between said erected-for-use configuration and said collapsed storage configuration, wherein said side, front and back panels are stacked, lying flat relative to one another to form a stack of said panels laying on said base and wherein in said storage configuration said stack is overlaid with said roof (24), and wherein the roof (24) has a circumferential rim (24a) depending downwardly there-around; **characterised in that** the base (12) has feet (12b) mounted underneath and at each corner thereof, and wherein hard points (28, 28a, 28b) are provided at each of the four corners of each mini-container (10), which hard points (28, 28a, 28b) are configured for bearing the vertical weight of the other mini containers so as to relieve bearing loads on mini-container seals when a set (10b) of mini-containers is stacked vertically, which hard points (28b) form part of vertical members (32) which are mounted to the corners of rim (24a), and which hard points (28a) form part of the underside of the feet (12b); and wherein, when the mini-container (10) is in the storage configuration, the mini-container (10) is configured for stacking a number of such mini-containers (10) one upon the other by interlocking of the hard points (28a) on one mini-container (10') with the hard points (28b) on a second mini-container, 10"
b) providing a mobile transport conveyor having at least one loading bed,
c) constructing each said mini-container of said plurality of mini-containers into said erected-for-use configuration, and storing cargo into said constructed plurality of mini-containers when in said erected-for-use configuration,
d) loading said plurality of mini-containers containing said cargo on to said at least one bed of said mobile transport conveyor,
wherein said mobile conveyor transport is chosen from the group comprising: a trailer (48), an automobile transport trailer, a convertible transport trailer, a flatbed trailer, an enclosed van trailer, a curtain-side trailer, a railwaycar (52), a flatbed railwaycar, a ship, a barge, an airplane.

8. The method of claim 7 and wherein said trailers (48) have a width which is constrained for highway use, and wherein said each mini-container has a length dimension (L), and wherein said each mini-container has a storage height dimension when in said storage configuration and an in-use height dimension (h) when in said erected-for-use configuration, and wherein said in-use height dimension (h) is substantially an even multiple of said storage height dimension.

9. The method of claim 7 and wherein at least said automobile transport trailer and said enclosed van trailer have an internal height restriction of less than or equal to substantially 9 feet (approximately 2.7 m), and a width of substantially 8½ feet, and wherein each said mini-container has a capacity of substantially 3 metres squared and is sized to fit within said width and wherein a vertical stack of said mini-containers snugly stacks within said height restriction, and wherein said snug stacking of said mini-containers (10) results in an uppermost surface of said stack being adjacent an uppermost limit of said height restriction.

10. The method of claim 7 and wherein each said mini-container includes a palletized base (12) and wherein a floor is formed on said base, and said palletized base has apertures (12a) therein for lifting of said mini-container base by a fork lift from both said front or back of said mini-container, and for lifting from either of said sides of said mini-container base so that the forklift loads said mini-containers from an end or from a side of said mobile transport conveyor.

11. The method of claim 7 wherein said plurality of mini-containers (10) are said loaded onto said mobile transport conveyer so as to form a load chosen from the group comprising: a load of only said mini-containers, a mixed load of said mini-containers and other cargo, a mixed load of said mini-containers and at least one automobile, a mixed load of said mini-containers in both said erected-for-use configuration so as to carry cargo therein, and said storage configuration in a stack thereof.

12. The method of claim 7 wherein the further step comprises lowering an upper deck of said automobile transport trailer (48) down substantially onto said stack of said mini-containers or raising a lower deck of said automobile transport trailer on which said stack of mini-containers is said stacked, so as to bring said uppermost surface of said stack of mini-containers substantially up to said upper deck of said automobile transport trailer.

13. The method of claim 7 wherein, when said plurality of mini-containers (10) have been transported and unloaded, then the further step comprising collapsing said plurality of mini-containers, each into said storage configuration, and storing said plurality of mini-containers, in a stack in said storage configuration, on said mobile transport conveyor for later re-use on said mobile transport conveyor in said crected-for-use configuration.

14. The method of claim 7 wherein said side, front and back panels are provided with releasable locks (38) for said releasable locking of said panels to one another.

15. The method of claim 7 wherein each said mini-container is further provided with at least one hinge (26) per said side, front or back panel, and said side, front or back panel folds down into a position within said stack adjacent said base when in said storage configuration.

16. The method of claim 15 wherein said each side, front and back panel has a corresponding hinge (26) of said at least one hinge, and all of said side, front and back panels fold down into said position adjacent said base so as to be overlaid under said roof.

17. The method of claim 7 wherein said roof (24) is a cap, and said cap encloses said panels within said cap when in said storage position.

18. The method of claim 17 wherein said cap also encloses at least an upper portion of said base (12).

## Patentansprüche

1. Minibehälter (10) für den intermodalen Versandt, der mehrere Wände aufweist, die ein Paar gegenüberliegend angeordneter Seitenwände (20, 22), eine Vorderwand (16), eine Rückwand (18) gegenüber der Vorderwand, eine Basis (12) und eine Deckplatte (24) ausbilden, wobei
die Seiten-, Vorder- und Rückwände, wenn sie auf der Basis aufgerichtet sind, eine Einhausung des Minibehälters (10) ausbilden, und die Wände konfigurierbar sind zwischen einer für den Gebrauch aufgerichteten Konfiguration, in der diese lösbar aneinander montiert sind, um eine Kiste auf der Basis auszubilden, und einer zusammengeklappten Aufbewahrungskonfiguration, in der die Seiten-, Vorder- und Rückwände flach zueinanderliegend gestapelt sind, um einen Stapel der auf der Basis liegenden Wände auszubilden, wobei in der Aufbewahrungskonfiguration die Deckplatte (24) auf dem Stapel liegt, und wobei
die Deckplatte (24) einen umfangsseitigen Rand (24a) aufweist, der umlaufend nach unten ragt;
**dadurch gekennzeichnet, dass**
die Basis (12) Füße (12b) darunter und an jeder Ecke derselben montiert aufweist, Hartpunkte (28, 28a, 28b) an jeder der vier Ecken des Minibehälters (10) vorgesehen sind und die Hartpunkte (28, 28a, 28b) eingerichtet sind, um das vertikale Gewicht weiterer Minibehälter (10) zu tragen, um Traglasten auf Minibehälterdichtungen zu verringern, wenn eine Gruppe von Minibehältern vertikal gestapelt ist;
die Hartpunkte (28b) einen Teil von Vertikalelementen (32) ausbilden, die an den Ecken des Rands (24a) montiert sind, und die Hartpunkte (28a) einen Teil der Unterseite der Füße (12b) ausbilden; und
der Minibehälter (10) zum Aufeinanderstapeln mehrerer solcher Minibehälter (10) eingerichtet ist, wenn sich der Minibehälter (10) in der Aufbewahrungskonfiguration befindet, durch Arretierung der Hartpunkte (28a) an einem Minibehälter (10') mit den Hartpunkten (28b) an einem zweiten Behälter (10").

2. Minibehälter nach Anspruch 1, bei dem in der für den Gebrauch aufgerichteten Konfiguration die Seiten-, Vorder- und Rückwände (16, 18, 20, 22) in einer vertikalen Position gehalten werden, um eine seitlich zusammenhängende Kiste auszubilden.

3. Minibehälter nach Anspruch 2, der ferner zumindest ein Scharnier (26) pro Wand aufweist, wobei die Seiten-, Vorder- oder Rückwand in die Aufbewahrungskonfiguration um die Scharniere in den Stapel neben der Basis herunterklappen.

4. Minibehälter nach Anspruch 3, bei dem jede Seiten-, Vorder- und Rückwand ein entsprechendes Scharnier des mindestens einen Scharniers aufweist und alle Seiten-, Vorder- und Rückwände in die Position neben der Basis herunterklappen, um unter der Deckplatte aufeinanderzuliegen.

5. Minibehälter nach Anspruch 4, bei dem die Deckplatte (24) eine Kappe ist und die Kappe die Wände in der Aufbewahrungskonfiguration innerhalb der Kappe im Wesentlichen umschließt.

6. Minibehälter nach Anspruch 5, bei dem die Kappe (24) ferner zumindest einen Teil der Basis umschließt.

7. Verfahren für den intermodalen Versandt unter Verwendung des Minibehälters (10) nach Anspruch 1, das aufweist:
a) Bereitstellen mehrerer Minibehälter nach Anspruch 1, wobei jeder Minibehälter (10) der mehreren Minibehälter aus den Wänden aufgebaut ist, um das Paar gegenüberliegend angeordneter Seitenwände (20, 22), eine Vorderwand (16), eine Rückwand (18) gegenüber der Vorderwand, eine Basis (12) und eine Deckplatte (24) auszubilden, wobei
die Seiten-, Vorder- und Rückwände zur Positionierung zwischen der für den Gebrauch aufgerichteten Konfiguration und der zusammengeklappten Aufbewahrungskonfiguration lösbar aneinander montierbar sind, um eine Einhausung des Minibehälters (10) auszubilden, und voneinander lösbar sind, wobei die Seiten-, Vorder- und Rückwände flach zueinanderliegend gestapelt sind, um einen Stapel der auf der Basis liegenden Wände auszubilden, wobei in der Aufbewahrungskonfiguration die Deckplatte (24) auf dem Stapel liegt, und wobei
die Deckplatte (24) einen umfangsseitigen Rand (24a) aufweist, der umlaufend nach unten ragt;
**dadurch gekennzeichnet, dass**
die Basis (12) Füße (12b) darunter und an jeder Ecke derselben montiert aufweist, Hartpunkte (28, 28a, 28b) an jeder der vier Ecken jedes Minibehälters (10) vorgesehen sind und die Hartpunkte (28, 28a, 28b) eingerichtet sind, um das vertikale Gewicht der weiteren Minibehälter zu tragen, um Traglasten auf Minibehälterdichtungen zu verringern, wenn eine Gruppe (10b) von Minibehältern vertikal gestapelt wird;
die Hartpunkte (28b) einen Teil von Vertikalelementen (32) ausbilden, die an den Ecken des Rands (24a) montiert sind, und die Hartpunkte (28a) einen Teil der Unterseite der Füße (12b) ausbilden; und
der Minibehälter (10) zum Aufeinanderstapeln mehrerer solcher Minibehälter (10) eingerichtet ist, wenn sich der Minibehälter (10) in der Aufbewahrungskonfiguration befindet, durch Arretierung der Hartpunkte (28a) an einem Minibehälter (10') mit den Hartpunkten (28b) an einem zweiten Behälter (10");
b) Bereitstellen eines mobilen Transportsystems mit zumindest einer Ladefläche,
c) Aufbauen jedes Minibehälters der mehreren Minibehälter in die für den Gebrauch aufgerichteten Konfiguration und Lagern von Waren in den aufgebauten mehreren Minibehältern, wenn in der für den Gebrauch aufgerichteten Konfiguration,
d) Verladen der mehreren, die Waren enthaltenden Minibehälter auf die Ladefläche des mobilen Transportsystems, wobei
das mobile Transportsystem aus einer Gruppe ausgewählt ist, die umfasst: einen Anhänger (48), einen Fahrzeugtransportanhänger, einen Cabriotransportanhänger, einen Tieflader, einen geschlossenen Anhänger, einen Planverdeckanhänger, einen Eisenbahnwagen (52), einen Flachschienenwagen, ein Schiff, einen Lastkahn, ein Flugzeug.

8. Verfahren nach Anspruch 7, bei dem die Anhänger (48) eine Breite aufweisen, die für die Verwendung auf Autobahnen begrenzt ist, jeder Minibehälter eine Längenabmessung (L) aufweist, jeder Minibehälter eine Aufbewahrungshöhenabmessung in der Aufbewahrungskonfiguration und eine Gebrauchshöhenabmessung (h) in der für den Gebrauch aufgerichteten Konfiguration aufweist, und die Gebrauchshöhenabmessung (h) im Wesentlichen ein ganzes Vielfaches der Aufbewahrungshöhenabmessung beträgt.

9. Verfahren nach Anspruch 7, bei dem zumindest der Fahrzeugtransportanhänger und der geschlossene Anhänger eine innere Höhenbeschränkung von weniger als oder im Wesentlichen gleich 9 Fuß (ca. 2,7 m) und eine Breite von im Wesentlichen 8 1/2 Fuß aufweisen, jeder der Minibehälter eine Kapazität von im Wesentlichen 3 Quadratmetern aufweist und so bemessen ist, dass er in diese Breite passt, ein vertikaler Stapel der Minibehälter gut in die Höhenbeschränkung passt, und der Stapel der Minibehälter (10) eine oberste Fläche des Stapels, die an eine oberste Grenze der Höhenbeschränkung grenzt, zur Folge hat.

10. Verfahren nach Anspruch 7, bei dem jeder Minibehälter eine palettierte Basis (12) aufweist, ein Boden auf der Basis ausgebildet ist und die palettierte Basis darin Öffnungen (12a) aufweist, zum Anheben der Minibehälterbasis durch einen Gabelstapler von vorn sowie von hinten des Minibehälters und zum Anheben von jeder der Seiten der Minibehälterbasis, so dass der Gabelstapler die Minibehälter von einem Ende oder einer Seite des mobilen Transportsystems verlädt.

11. Verfahren nach Anspruch 7, bei dem die mehreren Minibehälter (10) auf das mobile Transportsystem verladen werden, um eine Ladung ausgewählt aus einer Gruppe auszubilden, die umfasst: eine Ladung ausschließlich aus den Minibehältern, eine gemischte Ladung aus den Minibehältern und anderen Waren, eine gemischten Ladung aus den Minibehältern und zumindest einem Fahrzeug, eine gemischte Ladung aus den Minibehältern in der für den Gebrauch aufgerichteten Konfiguration, um Waren darin zu transportieren, sowie der Aufbewahrungskonfiguration in einem Stapel derselben.

12. Verfahren nach Anspruch 7, bei dem ein weiterer Schritt das Absenken eines Oberdecks des Fahrzeugtransportanhängers (48) im Wesentlichen auf den Stapel der Minibehälter oder Anheben eines Unterdecks des Fahrzeugtransportanhängers, auf dem der Stapel von Minibehältern gestapelt ist, umfasst, um die oberste Fläche des Stapels von Minibehältern im Wesentlichen bis zum Oberdeck des Fahrzeugtransportanhängers zu bringen.

13. Verfahren nach Anspruch 7, bei dem, wenn die mehreren Minibehälter (10) transportiert und entladen wurden, ein weiterer Schritt das Zusammenklappen der mehreren Minibehälter jeweils in die Aufbewahrungskonfiguration und das Aufbewahren der mehreren Minibehälter in einem Stapel in der Aufbewahrungskonfiguration auf dem mobilen Transportsystem umfasst, zur späteren Wiederverwendung auf dem mobilen Transportsystem in der für den Gebrauch aufgerichteten Konfiguration.

14. Verfahren nach Anspruch 7, bei dem die Seiten-, Vorder- und Rückwände mit lösbaren Verriegelungen (38) zum lösbaren Verriegeln der Wände aneinander versehen sind.

15. Verfahren nach Anspruch 7, bei dem jeder Minibehälter ferner mit mindestens einem Scharnier (26) pro Seiten-, Vorder- oder Rückwand versehen ist und die Seiten-, Vorder- oder Rückwand in die Aufbewahrungskonfiguration in eine Position innerhalb des Stapels neben der Basis herunterklappen.

16. Verfahren nach Anspruch 15, bei dem jede Seiten-, Vorder- und Rückwand ein entsprechendes Scharnier (26) des mindestens einen Scharniers aufweist und alle Seiten-, Vorder- und Rückwände in die Position neben der Basis herunterklappen, um unter der Deckplatte aufeinanderzuliegen.

17. Verfahren nach Anspruch 7, bei dem die Deckplatte (24) eine Kappe ist und die Kappe die Wände in der Aufbewahrungskonfiguration innerhalb der Kappe umschließt.

18. Verfahren nach Anspruch 17, bei dem die Kappe ferner zumindest einen oberen Teil der Basis (12) umschließt

## Revendications

1. Mini-conteneur (10) pour expédition intermodale, comprenant une pluralité de panneaux formant une paire de panneaux latéraux disposés de façon opposée (20, 22), un panneau avant (16), un panneau arrière (18) opposé audit panneau avant, une base (12), et un toit (24), dans lequel lesdits panneaux latéraux, avant et arrière, lorsqu'ils sont dressés sur ladite base, forment une enceinte dudit mini-conteneur (10), et dans lequel lesdits panneaux sont configurables entre une configuration dressée prête à l'emploi dans laquelle ils sont montés de façon détachable les uns avec les autres de manière à former un caisson sur ladite base, et une configuration de rangement pliée dans laquelle lesdits panneaux latéraux, avant et arrière sont empilés, posés à plat les uns par rapport aux autres de manière à former une pile desdits panneaux reposant sur ladite base, et dans lequel dans ladite configuration de rangement ladite pile est recouverte par ledit toit (24), et dans lequel le toit (24) présente un bord circonférentiel (24a) qui s'étend vers le bas tout autour de celui-ci;
**caractérisé en ce que** la base (12) comprend des pieds (12b) montés sur le dessous et à chaque coin de celle-ci;
dans lequel des points durs (28, 28a, 28b) sont prévus à chacun des quatre coins du mini-conteneur (10), lesdits points durs (28, 28a, 28b) étant configurés de manière à supporter le poids vertical d'autres mini-conteneurs (10) de manière à soulager les joints des mini-conteneurs des charges de support lorsqu'un ensemble (10b) de mini-conteneurs est empilé verticalement, lesdits points durs (28b) faisant partie d'éléments verticaux (32) qui sont montés sur les coins du bord (24a), et lesdits points durs (28a) faisant partie du côté inférieur des pieds (12b); et
dans lequel, lorsque le mini-conteneur (10) se trouve dans la configuration de rangement, le mini-conteneur (10) est configuré de manière à empiler un certain nombre de ces mini-conteneurs (10) les uns sur les autres en verrouillant mutuellement les points durs (28a) sur un mini-conteneur (10') avec les points durs (28b) d'un second mini-conteneur (10'').

2. Mini-conteneur selon la revendication 1, dans lequel, lorsqu'ils se trouvent dans ladite configuration dressée prête à l'emploi lesdits panneaux latéraux, avant et arrière (16, 18, 20, 22) sont maintenus dans une position verticale de manière à former un caisson à côtés contigus sur ladite base.

3. Mini-conteneur selon la revendication 2, comprenant en outre au moins une charnière (26) par panneau, et dans lequel lesdits panneaux latéral, avant ou arrière se replient autour desdites charnières dans ladite pile adjacente à ladite base lorsqu'ils se trouvent dans ladite configuration de rangement.

4. Mini-conteneur (10) selon la revendication 3, dans lequel ledit chaque panneau latéral, avant et arrière présente une liaison charnière correspondant à ladite au moins une charnière, et la totalité desdits panneaux latéraux, avant et arrière se replient dans ladite position adjacente à ladite base de manière à être superposés en dessous dudit toit.

5. Mini-conteneur selon la revendication 4, dans lequel ledit toit (24) est un couvercle, et ledit couvercle enferme sensiblement lesdits panneaux à l'intérieur dudit couvercle lorsqu'ils se trouvent dans ladite configuration de rangement.

6. Mini-conteneur selon la revendication 5, dans lequel ledit couvercle (24) enferme également au moins une partie de ladite base.

7. Procédé d'expédition intermodale en utilisant les mini-conteneurs selon la revendication 1, comprenant les étapes suivantes:
a) fournir une pluralité de mini-conteneurs selon la revendication 1, dans lequel chaque mini-conteneur (10) de ladite pluralité de mini-conteneurs est assemblé à partir desdits panneaux de manière à former ladite paire de panneaux latéraux disposés de façon opposée (20, 22), un panneau avant (16), un panneau arrière (18) opposé audit panneau avant, une base (12) et un toit (24), dans lequel lesdits panneaux latéraux, avant et arrière sont montés de façon détachable les uns avec les autres de manière à former une enceinte desdits mini-conteneurs (10) et sont détachés les uns des autres afin d'être positionnés entre ladite configuration dressée prête à l'emploi et ladite configuration de rangement pliée, dans laquelle lesdits panneaux latéraux, avant et arrière sont empilés, posés à plat les uns par rapport aux autres de manière à former une pile desdits panneaux reposant sur ladite base, et dans lequel dans ladite configuration de rangement ladite pile est recouverte par ledit toit (24), et dans lequel le toit (24) présente un bord circonférentiel (24a) qui s'étend vers le bas tout autour de celui-ci;
**caractérisé en ce que** la base (12) comprend des pieds (12b) montés sur le dessous et à chaque coin de celle-ci;
et dans lequel des points durs (28, 28a, 28b) sont prévus à chacun des quatre coins du mini-conteneur (10), lesdits points durs (28, 28a, 28b) étant configurés de manière à supporter le poids vertical des autres mini-conteneurs de manière à soulager les joints des mini-conteneurs des charges de support lorsqu'un ensemble (10b) de mini-conteneurs est empilé verticalement, lesdits points durs (28b) faisant partie d'éléments verticaux (32) qui sont montés sur les coins partie du côté inférieur des pieds (12b); et
dans lequel, lorsque le mini-conteneur (10) se trouve dans la configuration de rangement, le mini-conteneur (10) est configuré de manière à empiler un certain nombre de ces mini-conteneurs (10) les uns sur les autres en verrouillant mutuellement les points durs (28a) sur un mini-conteneur (10') avec les points durs (28b) d'un second mini-conteneur (10''),
b) fournir un convoyeur pour transport mobile présentant au moins une plate-forme de chargement,
c) ériger chacun desdits mini-conteneur de ladite pluralité de mini-conteneurs dans ladite configuration dressée prête à l'emploi, et stocker de la marchandise dans ladite pluralité de mini-conteneurs érigés lorsqu'ils se trouvent dans ladite configuration dressée prête à l'emploi,
d) charger ladite pluralité de mini-conteneurs contenant ladite marchandise sur ladite au moins une plate-forme dudit convoyeur pour transport mobile,
dans lequel ledit convoyeur pour transport mobile est choisi dans le groupe comprenant: une remorque (48), une remorque de transport d'automobiles, une remorque de transport convertible, une remorque à plateau, une remorque fourgon fermée, une remorque bâchée, un véhicule ferroviaire (52), un véhicule ferroviaire à plateau, un bateau, une barge, un avion.

8. Procédé selon la revendication 7, et dans lequel lesdites remorques (48) présentent une largeur qui est contrainte pour une utilisation sur autoroute, et dans lequel ledit chaque mini-conteneur présente une dimension de longueur (L), et dans lequel ledit chaque mini-conteneur présente une dimension de hauteur de rangement lorsqu'il se trouve dans ladite configuration de rangement et une dimension de hauteur d'utilisation (h) lorsqu'il se trouve dans ladite configuration dressée prête à l'emploi, et dans lequel ladite dimension de hauteur d'utilisation est sensiblement un multiple pair de ladite dimension de hauteur de rangement.

9. Procédé selon la revendication 7, et dans lequel au moins ladite remorque de transport d'automobiles et ladite remorque fourgon fermée présentent une restriction de hauteur interne inférieure ou égale à sensiblement 9 pieds (approximativement 2,7 m), et une largeur de sensiblement 8,5 pieds, et dans lequel chacun desdits mini-conteneurs présente une capacité de sensiblement 3 mètres carrés et est dimensionné de manière à s'agencer à l'intérieur de ladite largeur, et dans lequel une pile verticale desdits mini-conteneurs s'empile parfaitement à l'intérieur de ladite restriction de hauteur, et dans lequel ledit empilement parfait desdits mini-conteneurs (10) entraîne qu'une surface supérieure ultime de ladite pile est adjacente à une limite supérieure extrême de ladite restriction de hauteur.

10. Procédé selon la revendication 7, et dans lequel chacun desdits mini-conteneurs comprend une base palettisée (12), et dans lequel un plancher est formé sur ladite base, et ladite base palettisée comporte des ouvertures (12a) dans celle-ci afin de soulever ladite base de mini-conteneurs à l'aide d'un chariot élévateur à partir à la fois dudit avant ou dudit arrière desdits mini-conteneurs, et afin de soulever à partir de chacun desdits côtés de ladite base de mini-conteneurs de telle sorte que le chariot élévateur charge lesdits mini-conteneurs à partir d'une extrémité ou à partir d'un côté dudit convoyeur pour transport mobile.

11. Procédé selon la revendication 7, dans lequel ladite pluralité de mini-conteneurs (10) sont chargés sur ledit convoyeur pour transport mobile de manière à former une charge choisie dans le groupe comprenant: une charge comprenant uniquement lesdits mini-conteneurs, une charge mixte comprenant lesdits mini-conteneurs et une autre marchandise, une charge mixte comprenant lesdits mini-conteneurs et au moins une automobile, une charge mixte comprenant lesdits mini-conteneurs à la fois dans ladite configuration dressée prête à l'emploi, pour transporter de la marchandise dans ceux-ci, et dans ladite configuration de rangement sous la forme d'une pile de ceux-ci.

12. Procédé selon la revendication 7, comprenant l'étape supplémentaire qui consiste à abaisser un pont supérieur de ladite remorque de transport d'automobiles (48) sensiblement sur ladite pile desdits mini-conteneurs ou de lever un pont inférieur de ladite remorque de transport d'automobiles sur laquelle ladite pile de mini-conteneurs est empilée, de manière à amener ladite surface supérieure ultime de ladite pile de mini-conteneurs sensiblement jusqu'audit pont supérieur de ladite remorque de transport d'automobiles.

13. Procédé selon la revendication 7, comprenant, lorsque ladite pluralité de mini-conteneurs (10) ont été transportés et déchargés, les étapes supplémentaires qui consistent à replier ladite pluralité de mini-conteneurs, chacun dans ladite configuration de rangement, et à ranger ladite pluralité de mini-conteneurs, sous la forme d'une pile dans ladite configuration de rangement, sur ledit convoyeur pour transport mobile en vue d'une réutilisation ultérieure sur ledit convoyeur pour transport mobile dans ladite configuration dressée prête à l'emploi.

14. Procédé selon la revendication 7, dans lequel lesdits panneaux latéraux, avant et arrière sont pourvus de verrous amovibles (38) pour ledit verrouillage libérable desdits panneaux les uns avec les autres.

15. Procédé selon la revendication 7, dans lequel chacun desdits mini-conteneurs est en outre pourvu d'au moins une charnière (26) par panneau latéral, avant ou arrière, et lesdits panneaux latéraux, avant ou arrière se replient dans une position à l'intérieur de ladite pile adjacente à ladite base lorsqu'ils se trouvent dans ladite configuration de rangement

16. Procédé selon la revendication 15, dans lequel chaque panneau latéral, avant et arrière présente une liaison charnière correspondant (26) à ladite au moins une charnière, et la totalité desdits panneaux latéraux, avant et arrière se replient dans ladite position adjacente à ladite base de manière à être superposés en dessous dudit toit.

17. Procédé selon la revendication 7, dans lequel ledit toit (24) est un couvercle, et ledit couvercle enferme lesdits panneaux à l'intérieur dudit couvercle lorsqu'ils se trouvent dans ladite position de rangement.

18. Procédé selon la revendication 17, dans lequel ledit couvercle enferme également au moins une partie supérieure de ladite base (12).
